# EUROPÄISCHE PATENTSCHRIFT

(11) **EP 1 007 845 B1**
(45) Veröffentlichungstag und Bekanntmachung des Hinweises auf die Patenterteilung: **29.09.2004**
(21) Anmeldenummer: 98942621.8
(22) Anmeldetag: 24.07.1998
(51) Int. Cl.: F04B 1/14

(54) **TAUMELANTRIEB EINER AXIALKOLBENMASCHINE**
WOBBLING DRIVE OF AN AXIAL PISTON MACHINE
MECANISME EN NUTATION D'UNE MACHINE A PISTONS AXIAUX

(30) Priorität: 28.08.1997 DE 19737540
(43) Veröffentlichungstag der Anmeldung: 14.06.2000
(73) Patentinhaber: Alfred Kärcher GmbH & Co. KG, 71364 Winnenden (DE)
(72) Erfinder: BECKER, Klaus, D-91074 Herzogenaurach (DE); BRAUN, Berthold, D-91315 Höchstadt (DE); BAUMANN, Boris, D-91085 Weisendorf (DE)
(74) Vertreter: HOEGER, STELLRECHT & PARTNER Patentanwälte
(86) Internationale Anmeldenummer: PCT/EP1998/004657
(87) Internationale Veröffentlichungsnummer: WO 1999/011928

(56) Entgegenhaltungen:
- WO-A-92/16774
- WO-A-96/17694
- DE-A- 3 400 633
- DE-U- 9 112 170
- GB-A- 672 173
- GB-A- 674 892
- US-A- 1 748 907
- US-A- 2 920 488

## Beschreibung

### Gebiet der Erfindung

Die vorliegende Erfindung betrifft einen Taumelantrieb einer Axialkolbenmaschine. Bei derartigen Taumelantrieben steht eine Taumelscheibe stirnseitig in Wirkverbindung mit wenigstens einem Kolben, der parallel, oder aber auch geneigt zur Drehachse der Taumelscheibe angeordnet sein kann. Die Erfindung betrifft insbesondere auch Hochdruckreinigungsaggregate, in denen derartige Taumelantriebe Bestandteil einer Axialkolbenpumpe sind.

### Hintergrund der Erfindung

Aus der EP-A 0242550 beispielsweise ist ein Hochdruckreinigungsgerät bekannt, bei dem auf einer Antriebswelle eines Elektromotors ein Taumelkörper drehfest angeordnet ist. Weiterhin ist eine zu der Antriebswelle geneigt angeordnete Taumelscheibe vorgesehen, die stirnseitig mit mehreren zu der Drehachse der Antriebswelle achsparallel angeordneten Kolben in Wirkverbindung steht, wobei zwischen dem Taumelkörper und der Taumelscheibe ein Axialrillenkugellager angeordnet ist. Das Axialrillenkugellager ist mit Kugelrillen und an den Kugelrillen abwälzenden Kugeln versehen. Die wachsenden Anforderungen an die Leistungsfähigkeit derartiger Hochdruckreinigungsgeräte machen eine Erhöhung der Antriebsdrehzahl der Antriebswelle erforderlich. Auf die Kugeln des bekannten Axialrillenkugellagers wirken bei erhöhter Antriebsdrehzahl wesentlich erhöhte Fliehkräfte, so daß die Gefahr besteht, daß die Lastverteilung auf den Laufbahnen von einer gleichmäßigen Belastung auf eine Belastung des äußeren Kantenbereichs der Kugelrillen verlagert wird. Der damit einhergehende Verschleiß und die unter Umständen reduzierte Rollfähigkeit der Kugeln ist unerwünscht. Zudem besteht die Gefahr, daß sich infolge der erhöhten Kantenbelastung die Laufbahnen derart verformen, daß die Kugeln aus ihren Laufbahnbereich nach radial außen geschleudert werden.

Aus GB 674892 PS beispielsweise ist ein Taumelantrieb für eine Kolbenpumpe bekannt geworden, bei dem ein Schrägkugellager zwischen dem Taumelkörper und der Taumelscheibe und ein anderes Schrägkugellager zwischen dem Taumelkörper und einem Gehäuse angeordnet sind. Zwar werden die Kugeln unter einer Erhöhung der auf sie einwirkenden Fliehkraft lediglich stärker gegen ihre Kugelrillen angedrückt. Jedoch handelt es sich hier um einen aus vielen Einzelteilen zusammengesetzten Taumelantrieb: für jedes Schrägkugellager sind je ein Innenlaufring und ein Außenlaufring vorgesehen, wobei der massiv gebildete Taumelkörper Sitzflächen zur Aufnahme jeden Ringes aufweisen muß. Die Sitzflächen bei derartig massiv gebildeten Taumelkörpern werden in der Regel spangebend bearbeitet, so daß neben der hohen Teilevielzahl auch ein hoher Fertigungsaufwand erforderlich ist.

### Zusammenfassung der Erfindung

Aufgabe der vorliegenden Erfindung ist es daher, einen Taumelantrieb einer Axialkolbenmaschine gemäß dem Oberbegriff des Anspruchs 1 derart weiterzubilden, daß sichergestellt ist, daß auch bei erhöhten Antriebsdrehzahlen die Wälzkörper sicher in ihrem Laufbahnbereich gehalten sind.

Eine weitere der Erfindung zugrundeliegende Aufgabe besteht darin, den Fertigungsaufwand bei einem Taumelantrieb nach den Merkmalen des Oberbegriffs des Anspruchs 1 zu verringern.

Erfindungsgemäß wird diese Aufgabe dadurch gelöst, daß eine Kugelrille des einen Schrägkugellagers an einem einstückig mit der Taumelscheibe verbundenen Umlenkabschnitt des Bordes ausgebildet ist, und wobei ein Außenlaufring des anderen Schrägkugellagers einen scheibenförmigen Teil aufweist, der über einen Umlenkabschnitt einstückig mit einem axial gerichteten Bord verbunden ist, wobei eine Kugelrille an dem Umlenkabschnitt ausgebildet ist.

Die Wälzkörper können ihren Laufbahnbereich nicht verlassen, weil der Bord sie sicher in den Laufbahnen hält. Da die Taumelscheiben vorzugsweise zur Reduzierung dynamischer Kräfte von ihrem Gewicht her leicht sein sollen, bietet sich zur Herstellung derartiger Taumelscheiben dünnwandiges Blech an. Der erfindungsgemäß vorgesehene Bord erfüllt dann neben seiner Sicherungsfunktion eine weitere Funktion: Die Taumelscheibe wird durch den abgewinkelten Bord in ihrer Steifigkeit in günstiger Weise verstärkt.

Bei dem Schrägkugellager wälzen an dessen Kugelrillen die Kugeln ab. Der Druckwinkel ist dabei so eingestellt, daß auch bei erhöhten Antriebsdrehzahlen die Kugeln lediglich verstärkt an die Kugelrillen angedrückt werden. Handelt es sich um einen hohlzylindrischen Taumelkörper, beispielsweise aus dünnwandigem Blech, läßt sich das der Taumelscheibe zugewandte Ende problemlos zur Herstellung der Kugelrille umformen. Dies kann beispielsweise durch anprägen oder im Tiefziehverfahren bewerkstelligt werden.

Der Bord ist durch einen Umlenkabschnitt einstückig mit der Taumelscheibe verbunden, wobei der Umlenkabschnitt die Kugelrille trägt. Es ist kein separater Fertigungsschritt zur Erstellung der Kugelrille erforderlich.

An seinem von der Taumelscheibe abgewandten Ende weist der Taumelkörper einen nach innen gerichteten Radialflansch mit einer Aufnahme für eine Antriebswelle auf. In vorteilhafter Weise erhöht der Radialflansch die Steifigkeit des Taumelkörpers.

Zur sicheren radialen und axialen Abstützung der Antriebswelle ist der Taumelantrieb mit zwei Schrägkugellagern versehen, von denen das eine zwischen der Taumelscheibe und dem Taumelkörper und von. denen das andere zwischen dem Taumelkörper und einem Gehäuse angeordnet ist, wobei die Lagerachse des anderen Schrägkugellagers koaxial zu der Drehachse der Antriebswelle angeordnet ist. Das dem Taumelantrieb zugewandte Ende der Antriebswelle ist demzufolge über den Taumelkörper und das andere Schrägkugellager sicher an dem Gehäuse radial gestützt. Wenn die beiden Schrägkugellager in X-Anordnung in dem Taumelantrieb eingebaut sind, werden axiale Stützkräfte nicht in die Antriebswelle sondern über das andere Schrägkugellager in das Gehäuse eingeleitet. In diesem Fall bietet sich an, an beiden axialen Enden des Taumelkörpers je eine der Kugelrillen auszubilden. Dies geschieht vorzugsweise durch ein Umformen, wie es beispielsweise durch Anprägen oder im Tiefziehverfahren bewerkstelligt werden kann.

Sowohl der Taumelkörper als auch die Taumelscheibe des erfindungsgemäßen Taumelantriebs eignen sich in besonders günstiger Weise für die Herstellung in einem Spanlosverfahren, insbesondere Tiefziehverfahren, wobei dünnwandiges Blech eingesetzt werden kann.

Nachstehend wird die Erfindung anhand von einem in einer Figur dargestellten Ausführungsbeispiel näher erläutert.

### Ausführliche Beschreibung der Zeichnungen

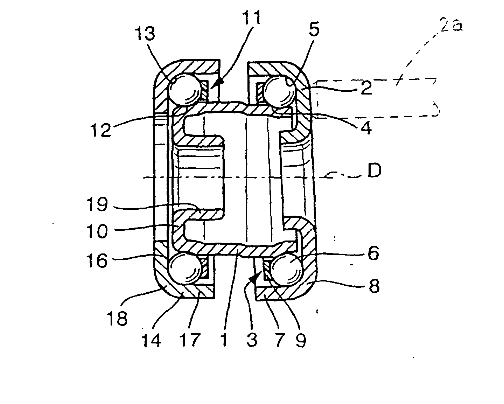

Die Figur zeigt im Längsschnitt einen erfindungsgemäßen Taumelantrieb, der einen um eine Drehachse D drehbaren Taumelkörper 1 und eine zu der Drehachse D geneigt angeordnete Taumelscheibe 2 aufweist, deren Stirnseite mit zu der Drehachse D achsparallel angeordneten Kolben 2a in Wirkverbindung steht, wobei zwischen dem Taumelkörper 1 und der Taumelscheibe 2 ein Schrägkugellager 3 angeordnet ist, das mit Kugelrillen 4, 5 versehen ist, an denen Kugeln 6 abwälzen. Der zu der Drehachse D achsparallel angeordneter Kolben 2a liegt stirnseitig an der Taumelcheibe 2 an. Infolge der Taumelbewegung der Taumelscheibe 2 wird der Kolben 2a axial bewegt. Die Lagerachse des Schrägkugellagers 3 ist geneigt zu der Drehachse D angeordnet. Auf diese Weise taumelt das Schrägkugellager 3 und die Taumelscheibe 2 in einer Taumelebene T.

Die Taumelscheibe 2 ist mit einem Bord 7 versehen, der den Taumelkörper 1 radial überlappt, wobei zwischen dem Taumelkörper 1 und dem Bord 7 die Kugeln 6 angeordnet sind. Die Kugelrille 5 ist an einem einstückig mit der Taumelscheibe 2 verbundenen Umlenkabschnitt 8 des Bordes 7 ausgebildet. Nach dem Umformen der Taumelscheibe 2 zur Herstellung des Bordes 7 ist vorzugsweise unmittelbar die Kugelrille 5 ausgebildet, ohne daß ein separater Fertigungsschritt zur Herstellung dieser Kugelrille 5 erforderlich ist. Die Kugelrille 4 ist ebenfalls durch Umformen des der Taumelscheibe 2 zugewandten axialen Endes des Taumelkörpers 1 gebildet. Da das Ende verjüngt ist, kann der vollständig mit Kugeln 6 bestückte Kugelkäfig 9 auf dieses Ende des Taumelkörpers aufgeschoben werden.

Die Taumelscheibe 2 weist an ihrem Innenumfang einen weiteren einstückig angeformten, axial gerichteten Bord 9a auf, der die Steifigkeit der Taumelscheibe 2 erhöht. An seinem von der Taumelscheibe 2 abgewandten Ende weist der Taumelkörper 1 einen nach innen gerichteten Radialflansch 10 mit einer Aufnahme für eine nicht dargestellt Antriebswelle auf. Der Radialflansch 10 erhöht die Steifigkeit des aus dünnwandigem Blech gebildeten Taumelkörpers 1.

An dem von der Taumelscheibe 2 abgewandten Ende der Taumelscheibe 2 ist ein weiteres Schrägkugellager 11 vorgesehen. Eine Kugelrille 12 ist an dem Ende des Taumelkörpers 1 vorgesehen, wobei die Kugelrille 12 auf die gleiche Art und Weise wie bei dem bereits oben beschriebenen Schrägkugellager hergestellt ist. Eine weitere Kugelrille 13 ist an einem Außenlaufring 14 ausgebildet, wobei der Außenlaufring 14 an einem nicht dargestellten Gehäuse befestigt ist. Die Lagerachse des Schräkugellagers 11 ist koaxial zu der Drehachse D. Der Außenlaufring weist einen scheibenförmigen Teil 16 und einen axial gerichteten Bord 17 auf, die miteinander durch einen Umlenkabschnitt 18 einstückig verbunden sind. Die Kugelrille 13 ist dabei in vorteilhafter Weise an dem Umlenkabschnitt 18 ausgebildet, ohne daß ein besonderer Fertigungsschritt zur Erstellung dieser Kugelrille 13 erforderlich ist. Ein weiterer Unterschied zu dem oben beschriebenen Ausführungsbeispiel besteht darin, daß der Radialflansch 10 des Taumelkörpers 1 mit einem koaxial angeordneten, nach axial innen gerichteten rohrförmigen Stutzen 19 versehen ist, der auf die nicht dargestellte Antriebswelle aufgeführt wird.

In dem beschriebenen Ausführungsbeispiel ist bei beiden Schrägkugellagern sichergestellt, daß auch bei erhöhter Antriebsdrehzahl keine Kantenbelastung der Laufbahnen infolge wachsender Fliehkräfte auftreten.

### Bezugszahlenliste

- 1: Taumelkörper
- 2: Taumelscheibe
- 2a: Kolben
- 3: Schrägkugellager
- 4: Kugelrille
- 5: Kugelrille
- 6: Kugel
- 7: Bord
- 8: Umlenkabschnitt
- 9: Kugelkäfig
- 9a: Bord
- 10: Radialflansch
- 11: Schrägkugellager
- 12: Kugelrille
- 13: Kugelrille
- 14: Außenlaufring
- 15: (frei)
- 16: scheibenförmiger Teil
- 17: Bord
- 18: Umlenkabschnitt
- 19: rohrförmiger Stutzen

## Patentansprüche

1. Taumelantrieb einer Axialkolbenmaschine, insbesondere einer Axialkolbenpumpe eines Hochdruckreinigungsgeräts, der einen um eine Drehachse (D) drehbaren Taumelkörper (1) und eine zu der Drehachse (D) geneigt angeordnete Taumelscheibe (2) aufweist, die stirnseitig mit wenigstens einem Kolben (2a) in Wirkverbindung steht, wobei zwischen dem Taumelkörper (1) und der Taumelscheibe (2) ein Schrägkugellager (3) und zwischen dem Taumelkörper (1) und einem Gehäuse ein anderes Schrägkugellager (11) angeordnet sind, wobei die Taumelscheibe (2) mit einem den Taumelkörper (1) überlappenden Bord (7) versehen ist, zwischen dem und dem Taumelkörper (1) die Wälzkörper (6) des Schrägkugellagers (3) angeordnet sind, **dadurch gekennzeichnet, daß** eine Kugelrille (5) des einen Schrägkugellagers (3) an einem einstückig mit der Taumelscheibe (2) verbundenen Umlenkabschnitt (8) des Bordes (7) ausgebildet ist, und wobei ein Außenlaufring (14) des anderen Schrägkugellagers (11) einen scheibenförmigen Teil (16) aufweist, der über einen Umlenkabschnitt (18) einstückig mit einem axial gerichteten Bord (17) verbunden ist, wobei eine Kugelrille (13) an dem Umlenkabschnitt (18) ausgebildet ist.

2. Taumelantrieb nach Anspruch 1, bei dem der hohlzylindrische Taumelkörper (1) an seinem der Taumelscheibe (2) zugewandten Ende eine der Kugelrillen (4) trägt.

3. Taumelantrieb nach Anspruch 1, bei dem der Taumelkörper (1) an seinem von der Taumelscheibe (2) abgewandten Ende einen nach innen gerichteten Radialflansch (10) mit einer Aufnahme (11, 19) für eine Antriebswelle aufweist.

4. Taumelantrieb nach Anspruch 1, bei dem an dem Taumelkörper (1) an dessen äußerer Mantelfläche an beiden axialen Enden je eine der Kugelrillen (4, 12) der beiden Schrägkugellager (3, 11) ausgebildet sind.

5. Taumelantrieb nach Anspruch 1, bei dem die beiden Schrägkugellager (3, 13) eine X-Anordnung aufweisen.

6. Taumelantrieb nach Anspruch 1, bei der der Taumelkörper (1) und die Taumelscheibe (2) in einem Spanlosverfahren, insbesondere Tiefziehverfahren aus Blech hergestellt sind.

## Claims

1. A wobble drive of an axial piston machine, in particular of an axial piston pump of a high-pressure cleaning device, said drive having a wobble body (1), which is rotatable about an axis of rotation (D), and a swash plate (2), which is arranged in an inclined manner relative to the axis of rotation (D) and which is operatively connected on its front side to at least one piston (2a), there being arranged between the wobble body (1) and the swash plate (2) an angular-contact ball bearing (3) and between the wobble body (1) and a housing another angular-contact ball bearing (11), the swash plate (2) being provided with a rim (7), which overlaps the wobble body (1) and between which rim and the wobble body (1) there are arranged the rolling bodies (6) of the angular-contact ball bearing (3), **characterised in that** a ball race (5) of the one angular-contact ball bearing (3) is formed on a deflection portion (8) of the rim (7), which portion is integrally connected to the swash plate (2), and an outer ball ring (14) of the other angular-contact ball bearing (11) having a plate-shaped part (16), which is integrally connected to an axially extending rim (17) by means of a deflection portion (18), a ball race (13) being formed on the deflection portion (18).

2. A wobble drive according to claim 1, wherein the hollow cylindrical wobble body (1), on its end facing towards the swash plate (2), bears one of the ball races (4).

3. A wobble drive according to claim 1, wherein the wobble body (1), on its end facing away from the swash plate (2), has an inwardly extending radial flange (10) with a receiver (11, 19) for a drive shaft.

4. A wobble drive according to claim 1, wherein on the outer peripheral surface of the wobble body (1) there is formed on each of the two axial ends one of the ball races (4, 12) of the two angular-contact ball bearings (3, 11).

5. A wobble drive according to claim 1, wherein the two angular-contact ball bearings (3, 13) are in an X arrangement.

6. A wobble drive according to claim 1, wherein the wobble body (1) and the swash plate (2) are made in a non-cutting process, in particular a deep-drawing process, from sheet metal.

## Revendications

1. Dispositif d'entraînement en nutation d'une machine à piston axial, en particulier d'une pompe à piston axial d'un appareil de nettoyage à forte pression, lequel dispositif d'entraînement en nutation comporte un corps de nutation (1) apte à tourner autour d'un axe de rotation (D), et un disque de nutation (2) qui est incliné par rapport à l'axe de rotation (D) et qui est sur une face en liaison active avec un piston (2a), un roulement à billes à portée oblique (3) étant agencé entre le corps de nutation (1) et le disque de nutation (2), et un autre roulement à billes à portée oblique (11) étant agencé entre le corps de nutation (1) et un boîtier, le disque de nutation (2) étant doté d'un bord (7) recouvrant le corps de nutation (1), les corps de roulement (6) du roulement à billes à portée oblique (3) étant disposés entre ledit bord (7) et le corps de nutation (1), **caractérisé en ce qu'**une gorge à billes du roulement à billes à portée oblique (3) est ménagée au niveau d'une section coudée (8) du bord (7) reliée étant en venue de matière au disque de nutation (2), une bague de roulement extérieure (14) de l'autre roulement à billes à portée oblique (11) comportant une partie discoïdale qui est reliée en étant venue de matière avec un bord (17) dirigé axialement, une gorge à billes (13) étant ménagée au niveau de la section coudée (18).

2. Dispositif d'entraînement en nutation selon la revendication 1, dans lequel le corps de nutation (1), en forme de cylindre creux, supporte au niveau de son extrémité dirigée vers le disque de nutation l'une des gorges à billes (4).

3. Dispositif d'entraînement en nutation selon la revendication 1, dans lequel le corps de nutation (1) comporte, à son extrémité opposée au disque de nutation (2), un rebord radial (10), dirigé vers l'intérieur, qui présente un logement (11, 19) destiné à un arbre d'entraînement.

4. Dispositif d'entraînement en nutation selon la revendication 1, dans lequel chaque gorge à billes (4, 12) des deux roulements à billes à portée oblique (3, 11) est respectivement conformée sur le corps de nutation (1) à ses deux extrémités axiales.

5. Dispositif d'entraînement en nutation selon la revendication 1, dans lequel les deux roulements à billes à portée oblique (3, 11) présente un agencement en X.

6. Dispositif d'entraînement en nutation selon la revendication 1, dans lequel le corps nutation (1) et le disque de nutation (2) sont fabriqués en tôle par un procédé sans enlèvement de copeaux, en particulier un procédé d'emboutissage profond.
